# EUROPÄISCHE PATENTANMELDUNG

(11) **EP 1 914 496 A2**
(43) Veröffentlichungstag der Anmeldung: **23.04.2008**
(21) Anmeldenummer: 07017713.4
(22) Anmeldetag: 11.09.2007
(51) Int. Cl.: F26B 21/08

(54) **Vorrichtung zum Trocknen von Schüttgut sowie Verfahren zum Trocknen von Schüttgut unter Verwendung einer solchen Vorrichtung**

(30) Priorität: 16.10.2006 DE 102006049437
(71) Anmelder: LANCO GmbH, 63452 Hanau (DE)
(72) Erfinder: Jakob, Peter, 63500 Sellgenstadt (DE)
(74) Vertreter: Grimm, Ekkehard

(57) **Zusammenfassung**

Die Erfindung bezieht sich auf eine Vorrichtung zum Trocknen von Schüttgut mit einem Trocknungsbehälter (1) zur Aufnahme von Schüttgut (4), mit einem Trocknungskreis, der ein Trockenluftgebläse (9), das mit dem Trocknungsbehälter an dessen oberem Ende über eine Saugleitung (6) verbunden ist, und eine Trocknungs-Heizeinrichtung (23), die über eine Druckleitung (25) mit dem unteren Ende des Trocknungsbehälters (1) verbunden ist, umfasst, mit einer Trocknungseinrichtung, die eine Trockenmittelkammer (14) mit Trocknungsmittel (15) umfasst, die in den Luftkreislauf zwischen Trockenluftgebläse (9) und Trocknungs-Heizeinrichtung (23) eingebunden ist, mit einem Regenerationskreis für das Trocknungsmittel (15), der eine Regenerations-Heizeinrichtung (16), die der Trockenmittelkammer (14) zugeordnet ist, und ein Regenerationsluftgebläse (34) umfasst, und mit mindestens zwei Absperreinrichtungen (11,19) in dem Leitungssystem, um den Regenerationskreis zyklisch zu aktivieren, die dadurch gekennzeichnet ist, dass die Absperreinrichtungen mindestens zwei Ventile (11,19) sind, die in einer Stellung die Druckseite des Trockenluftgebläses (9) direkt mit der Eingangsseite der Trocknungs-Heizeinrichtung (23) über eine Bypassleitung verbinden, und dass das Regenerationsluftgebläse (34) sowie die Trockenmittelkammer (14) einen unabhängigen Regenerationskreis mit Frischluftzufuhr bilden. Weiterhin betrifft die Erfindung ein Verfahren zum Trocknen von Schüttgut unter Verwendung einer solchen Vorrichtung.

## Beschreibung

Die Erfindung betrifft eine Vorrichtung zum Trocknen von Schüttgut mit einem Trocknungsbehälter zur Aufnahme von Schüttgut , mit einem Trocknungskreis, der ein Trockenluftgebläse, das mit dem Trocknungsbehälter an dessen oberem Ende über eine Saugleitung verbunden ist, und eine Trocknungs-Heizeinrichtung, die über eine Druckleitung mit dem unteren Ende des Trocknungsbehälters verbunden ist, umfasst, mit einer Trocknungseinrichtung, die eine Trockenmittelkammer mit Trocknungsmittel umfasst, die in den Luftkreislauf zwischen Trockenluftgebläse und Trocknungs-Heizeinrichtung eingebunden ist, mit einem Regenerationskreis für das Trocknungsmittel, der eine Regenerations-Heizeinrichtung, die der Trockenmittelkammer zugeordnet ist, und ein Regenerationsluftgebläse umfasst, und mit mindestens zwei Absperreinrichtungen in dem Leitungssystem, um den Regenerationskreis zyklisch zu aktivieren.

Bei den meisten Trocknungsvorgängen - z. B. bei der Trocknung von Kunststoffgranulat mittels getrocknetem Gas - ist es erwünscht, dass ein kontinuierlicher Gasstrom durch das Trockengut fließt, damit die Temperatur des aus dem Trocknungsbehälter abfließenden und getrockneten Granulats möglichst konstant bleibt. Außerdem ist ein möglichst stabiler Taupunkt des Trockengases erwünscht, um ein gleichbleibendes Trocknungsergebnis zu erhalten.

In der DE-A-2 354 745 ist eine Vorrichtung beschrieben, bei der von Zeit zu Zeit der Trockenluftstrom durch Umkehr der Drehrichtung des Trockenluftgebläses unterbrochen wird, um dann über Klappen oder Ventile gesteuert den Gasstrom zur Regeneration des Trockenmittels zu benutzen. Die notwendige Luftmenge zum Regenerieren des Trockenmittels beträgt meist zwischen 20 bis 30% der notwendigen Luftmenge zur Trocknung des Schüttguts. Außerdem liegt die Temperatur zum Regenerieren des Trocknungsmittels (zum Beispiel bei Molekularsieb auf Basis Zeolith) mit ca. 200 °C bis 300 °C meistens deutlich höher als die zum Trocknen der meisten Schüttgüter - z. B. Kunststoffgranulate - anwendbaren Temperaturen. Bei einer Vorrichtung gemäß der DE-A-2 354 745 mit nur einer Trockenmittelkammer dauert das Aufheizen des Trockenmittels auf Regeneriertemperatur und das anschließende Abkühlen auf etwa die Trockentemperatur des Trockengutes zirka 20 bis 30 Minuten. In diesem Zeitraum strömt kein Gas durch das zu trocknende Schüttgut im Trocknungsbehälter, wodurch größere Schwankungen der Temperatur im Trocknungsbehälter entstehen und der Aufheizprozess unterbrochen wird. Außerdem entstehen beim Umschalten einer zuvor frisch regenerierten Trockenmittelkammer in den Trockenluftvorlauf, abweichend von der optimalen Trocknungstemperatur, auch starke Schwankungen des Taupunktes des Trockengases, die sich negativ auf den zu trocknenden Rohstoff bzw. das Trocknungsergebnis auswirken.

In der EP 0 162 140 B1 ist eine Vorrichtung beschrieben, mit der die Temperatur- und Taupunktschwankungen durch das Zusammenschalten mehrerer Trockenmittelkammern ausgeglichen werden sollen, indem wechselweise immer eine Kammer regeneriert wird, während eine oder mehrere zuvor regenerierte Kammern im Trockenluftkreislauf die dort anfallende Feuchtigkeit adsorbieren. Der apparative Aufwand und der Steuerungsaufwand für eine solche Vorrichtung sind naturgemäß viel größer als bei einer Vorrichtung mit nur einer Trockenmittelkammer, und entsprechend höher ist der Preis einer Mehrkammer-Trocknung mit in etwa konstantem Luftstrom, konstanter Temperatur und konstantem Taupunkt der Trockenluft, die zum Schüttgut im Trocknungsbehälter gelangen soll.

Weitere Vorrichtungen sind aus der EP 0 061 161 B1 und aus der EP 0 266 684 A3 bekannt.

Der vorliegenden Erfindung liegt die Aufgabe zugrunde, eine Vorrichtung zum Trocknen von Schüttgut sowie ein Verfahren zum Trocknen von Schüttgut unter Verwendung einer solchen Vorrichtung zu schaffen, bei denen gerade in der Regenerationsphase der Trockenmittelkammer sichergestellt wird, dass insbesondere die Temperatur im Trocknungsbehälter konstant bleibt, und die dennoch kostengünstig, im Vergleich zu bestehenden Vorrichtungen und Anlagen, hergestellt werden kann.

Gelöst wird diese Aufgabe durch eine Vorrichtung zum Trocknen von Schüttgut mit einem Trocknungsbehälter zur Aufnahme von Schüttgut, mit einem Trocknungskreis, der ein Trockenluftgebläse, das mit dem Trocknungsbehälter an dessen oberem Ende über eine Saugleitung verbunden ist, und eine Trocknungs-Heizeinrichtung, die über eine Druckleitung mit dem unteren Ende des Trocknungsbehälters verbunden ist, umfasst, mit einer Trocknungseinrichtung, die eine Trockenmittelkammer mit Trocknungsmittel umfasst, die in den Luftkreislauf zwischen Trockenluftgebläse und Trocknungs-Heizeinrichtung eingebunden ist, mit einem Regenerationskreis für das Trocknungsmittel, der eine Regenerations-Heizeinrichtung, die der Trockenmittelkammer zugeordnet ist, und ein Regenerationsluftgebläse umfasst, und mit mindestens zwei Absperreinrichtungen in dem Leitungssystem, um den Regenerationskreis zyklisch zu aktivieren, die dadurch gekennzeichnet ist, dass die Absperreinrichtungen mindestens zwei Ventile sind, die in einer Stellung die Druckseite des Trockenluftgebläses direkt mit der Eingangsseite der Trocknungs-Heizeinrichtung über eine Bypassleitung verbinden, und dass das Regenerationsluftgebläse sowie die Trockenmittelkammer einen unabhängigen Regenerationskreis mit Frischluftzufuhr bilden.

Verfahrensgemäß wird die Aufgabe unter Verwendung einer solchen Vorrichtung dadurch gelöst dass, in einer Betriebsphase zum Trocknen des Schüttguts der Trocknungskreis durch entsprechende Einstellungen der mindestens zwei Ventile so eingerichtet ist, dass die von dem Trocknungsbehälter über das Trockenluftgebläse angesaugte Luft der Trockenmittelkammer zugeführt wird, die aus der Trockenmittelkammer austretende Luft der Trocknungs-Heizeinrichtung zugeführt wird und die über die Trocknungs-Heizeinrichtung erwärmte Luft dem Trocknungsbehälter zugeführt wird, während in einer Betriebsphase zum Regenerieren des Trockenmittels die mindestens zwei Ventile so eingestellt sind, dass die von dem Trocknungsbehälter über das Trockenluftgebläse angesaugte Luft unmittelbar der Trocknungs-Heizeinrichtung und von dort dem Trocknungsbehälter zugeführt wird und gleichzeitig der Eingangsseite der Trockenmittelkammer Frischluft Ober das Regenerationsluftgebläse zugeführt wird, hierbei das Trocknungsmittel aufgeheizt wird und die aus der Trockenmittelkammer austretende Luft abgeführt wird, so dass Regenerationsluftgebläse und Trockenmittelkammer und einen unabhängigen Regenerationskreis bilden.

Mit der Erfindung wird ein kostengünstiger und einfacher und betriebssicherer Aufbau einer Trocknungsvorrichtung mit nur einer Trockenmittelkammer erzielt, während gleichzeitig sichergestellt wird, dass die Temperatur im Trocknungsbehälter während der Regeneration der Trockenmittelkammer konstant bleibt und die dem Trocknungsbehälter zugeführte Luftmenge so ausgeregelt werden kann, dass nur die entsprechend dem aktuellen Verbrauch an Schüttgut und den prozessbedingten Wärmeverlusten notwendige Wärmemenge nachgeführt wird, und dass bei der Zuschaltung der frisch regenerierten Trockenmittelkammer in den Trockenluftvorlauf keine Temperatur- und nur geringe Taupunktschwankungen entstehen können.

In einer bevorzugten Ausführungsform sind zwei Ventile ausreichend, um die Anlage zum einen im Trockenbetrieb zum Trocknen des Schüttguts und zum anderen im Regenerationsbetrieb der Trockenmittelkammer zu betreiben bzw. zwischen diesen zwei Betriebsphasen umzuschalten. Hierzu ist das eine Ventil in der Druckleitung zwischen der Druckseite des Trockenluftgebläses und der Luftzuführungsseite der Trockenmittelkammer angeordnet und das andere Ventil ist zwischen der Ausgangsseite der Trockenmittelkammer und der Eingangsseite der Trocknungs-Heizeinrichtung angeordnet. Die beiden Ventile unterbrechen in einer ihrer beiden Stellungen zum einen die Luftzuführung zu der Trockenmittelkammer und zum anderen die Verbindung zwischen Trockenmittelkammer und der Eingangsseite der Trocknungs-Heizeinrichtung. Gleichzeitig stellen sie in dieser Stellung eine Verbindung zwischen der Druckseite des Trockenluftgebläses und der Eingangsseite der Trocknungs-Heizeinrichtung her. In der anderen Stellung geben die beiden Ventile zum einen die Luftzuführung von dem Trockenluftgebläse zu dem Eingang der Trockenmittelkammer frei; gleichzeitig wird auch die Verbindung zwischen Trockenmittelkammer und der Eingangsseite der Trocknungs-Heizeinrichtung freigeben und dabei eine direkte Verbindung zwischen der Druckseite des Trockenluftgebläses und der Eingangsseite der Trocknungs-Heizeinrichtung unterbrochen - in dieser Stellung der Ventile wird gleichzeitig auch die Frischluftzufuhr zu der Trockenmittelkammer unterbrochen.

Für eine solche Unterbrechung der Frischluftzufuhr kann neben der Abschaltung des Regenerationsluftgebläses in einer Ausführungsform eine Rückschlagklappe ausreichend sein, die selbsttätig arbeitet und demzufolge nicht extern betätigt werden muss. Die Unterbrechung der Frischluftzufuhr kann aber auch, anstelle einer solchen Rückschlagklappe, durch ein Ventil unterbrochen werden, wobei vorzugsweise dieses Ventil auf der Druckseite des Regenerationsluftgebläses angeordnet ist.

Um die Temperatur der Trocknungs-Heizeinrichtung zu regeln, ist ausgangsseitig der Trocknungs-Heizeinrichtung ein Temperatursensor angeordnet, der den Istwert der Temperatur erfasst, um, unter Berücksichtigung dieses Istwerts und eines Vergleichs des Istwerts mit dem geforderten Sollwert, die Trocknungs-Heizeinrichtung zu regeln.

Mit einem Temperatursensor, der eingangsseitig des Trockenluftgebläses, d. h. auf der Saugseite, angeordnet ist, kann die Temperatur von zugeführter Luft erfasst werden. Es ist wesentlich für eine gute Entfeuchtungswirkung des Trockenmittels, dass bei ansteigender Temperatur der Rückluft vom Trockentrichter die Fördermenge des Trockenluftgebläses soweit reduziert wird, dass eine konstante Rücklufttemperatur knapp über der am Aufstellort der Trocknungsvorrichtung herrschenden Umgebungstemperatur gehalten wird.

Auch kann ein Temperatursensor ausgangsseitig der Trockenmittelkammer angeordnet werden, der die Temperatur der Regenerationsabluft erfasst, um diese Temperatur auf einen Wert einzustellen, der etwas über dem Siedepunkt des im Trocknungsmittel gespeicherten Wassers liegt. Bei Erreichen dieser Temperatur von z. B. 105 °C kann die Aufheizphase zur Regeneration des Trocknungsmittels abgebrochen und auf Kühlbetrieb umgeschaltet werden.

Es hat sich als bevorzugt erwiesen, eine Heizung für die Trockenmittelkammer direkt in der Trockenmittelkammer, die mit dem Trocknungsmittel gefüllt ist, anzuordnen. Mit einer solchen Anordnung der Heizung kann erreicht werden, dass die Energieverluste beim Aufheizen des Trockenmittels möglichst gering bleiben.

Um in einer solchen Anordnung der Heizung die 0berflächentemperatur der Heizstäbe auf maximal 360 °C zu begrenzen, um das in der Trockenmittelkammer vorhandene Trocknungsmittel nicht thermisch zu schädigen, ist ein Temperatursensor direkt an der Heizung der Trockenmittelkammer angeordnet.

Falls die Vorrichtung, wie vorstehend erwähnt, mit zwei Ventilen oder auch mit drei Ventilen betrieben wird, ist es bevorzugt, diese Ventile gleichzeitig anzusteuern und zu betätigen. Eine solche Betätigung der Ventile am Ein- und Ausgang der Trockenmittelkammer kann mit Druckluft durch ein gemeinsames Magnetventil erfolgen.

Um Schüttgut in den Trocknungsbehälter nachzufüllen, kann ein Schüttgut-Einlass an der Oberseite des Trocknungsbehälters vorgesehen werden.

Verfahrensgemäß wird bevorzugt die Eingangstemperatur der Luft in den Trocknungsbehälter mittels der Trocknungs-Heizeinrichtung konstant gehalten, und durch zeitweise Unterbrechung der Befüllung des Trocknungsbehälters mit Trockengut wird verhindert, dass die Wassermenge im Trocknungsbehälter nicht während der Zeit ansteigt, in der die Trockenmittelkammer von einem Regenerationsgebläse aufgeheizt und wieder abgekühlt wird.

Es ist von Vorteil, wenn der Luftstrom, der im Trockenbetrieb durch den Trocknungsbehälter strömt, in Abhängigkeit von der Rücklauftemperatur des Gases, gemessen auf der Saugseite des Trockenluftgebläses, stufenlos entsprechend dem Wärmebedarf des Trockengutes und der prozessbedingten Wärmeverluste geregelt wird. Hierdurch wird ein besonders energiesparender Betrieb erreicht, bei dem keine Rücklaufkühlung zur Ableitung überschüssiger Wärme erforderlich ist und bei dem die Wasser-Aufnahmefähigkeit des Trockenmittels deutlich besser ist als bei Temperaturen nahe den Trocknungstemperaturen der meisten Schüttgüter.

In der Trocknungsphase bei der Trocknung von temperaturempfindlichem Trockengut kann zur Regelung der Trockenluftmenge bei Gleichstrommotoren eine Impulsweiten-Modulation eingesetzt werden, um unerwünschte Friktionswärme der Gebläse zu vermeiden und deren mechanischen Wirkungsgrad zu erhöhen.

Falls Dreh- oder Wechselstrommotoren für das Trockenluftgebläse eingesetzt werden, wird zur Regelung der Trockenluftmenge eine Frequenzumrichtung eingesetzt.

Um ein sukzessives Ansteigen der Rücklauftemperatur deutlich über die herrschende Umgebungstemperatur der Vorrichtung zu verhindern, kann die Luftmenge, die durch den Trocknungsbehälter geführt wird, entsprechend der Differenz zwischen der Umgebungstemperatur des Trocknungsbehälters und der Rücklauftemperatur des Gases, gemessen auf der Saugseite des Trockenluftgebläses, stufenlos geregelt werden.

In einer bevorzugten Ausführungsform wird die Regenerstionsablufttemperatur der Trockenmittelkammer während der Kühlphase nach erfolgtem Aufheizen auf Regenerationstemperatur stetig mit der Eingangstemperatur des Gases in den Trocknungsbehälter verglichen, und bei gleichem Wert der beiden Temperaturen erfolgt die Umschaltung der frisch regenerierten Trockenmittelkammer in den Trockenluftkreislauf.

Die vorstehend angegebene Vorrichtung bietet die Möglichkeit, dass bei Ausfall von Druckluft oder Strom im Bereich der Trockenmittelkammer ein Luftstrom durch den Trocknungsbehälter unter Abtrennung der Trockenmittelkammer mit konstanter Temperatur aufrechterhalten wird. Hierdurch kann gewährleistet werden, dass der Produktionsablauf zunächst weitergeführt werden kann, während ein Defekt an der separaten Trockenmittelkammer beseitigt wird.

Aufgrund der Anordnung der Ventile, die vorstehend beschrieben ist, ist die Möglichkeit gegeben, das Regenerationsluftgebläse in der Trocknungsphase als Fördergebläse zu nutzen, um Schüttgut in den Trocknungsbehälter zu befördern.

Um die Komponenten der Anordnung gering zu halten, ist es bevorzugt, das Regenerationsluftgebläse in der Trocknungsphase auf seiner Druckseite von der Trockenmittelkammer abzutrennen, um es auf seiner Saugseite als Fördergebläse zu nutzen; dies ist möglich, da ansonsten das Regenerationsluftgebläse nur in der Regenerationsphase benötigt wird.

Um die Vorrichtung zum Trocknen von Schüttgut kontinuierlich betreiben zu können, wird gleichzeitig mit dem Verbrauch von Schüttgut, beispielsweise an einer Extrusionsanlage, der verbrauchte Anteil an Schüttgut in den Trocknungsbehälter nachgefüllt, wozu, wie vorstehend erwähnt, das Regenerationsluftgebläse genutzt werden kann.

Eine Trockenmittelkammer, wie sie vorstehend beschrieben ist, kann dazu eingesetzt werden, das Schüttgut von mehreren Trocknungsbehältern zu entfeuchten, wozu dann jedem Trocknungsbehälter ein eigenes Trockenluftgebläse und eine eigene Temperaturregelung zuzuordnen wäre. Während der Regeneration der Trockenmittelkammer werden dann die Temperatur und die Luftmenge eines jeden Trocknungsbehälters auf dessen jeweiligen Wärmebedarf und den Temperatur-Sollwert ausgeregelt.

Weitere Einzelheiten und Merkmale der vorliegenden Erfindung ergeben sich aus der nachfolgenden Beschreibung von bevorzugten Ausführungsformen anhand der Zeichnung. In der Zeichnung zeigt
- Figur 1: eine erste Ausführungsform einer schematisch dargestellten Vorrichtung zum Trocknen von Schüttgut im Trocknungsbetrieb,
- Figur 2: die Vorrichtung nach Figur 1 im Regenerationsbetrieb,
- Figur 3: eine zweite Ausführungsform einer schematisch dargestellten Vorrichtung zum Trocknen von Schüttgut im Trocknungsbetrieb mit Schüttgut-Nachfüllanordnung,
- Figur 4: die Vorrichtung der Figur 3 beim Befüllen des Trocknungsbehälters, und
- Figur 5: die Vorrichtung nach Figur 3 im Regenerierbetrieb ohne Befüllung des Trocknungsbehälters.

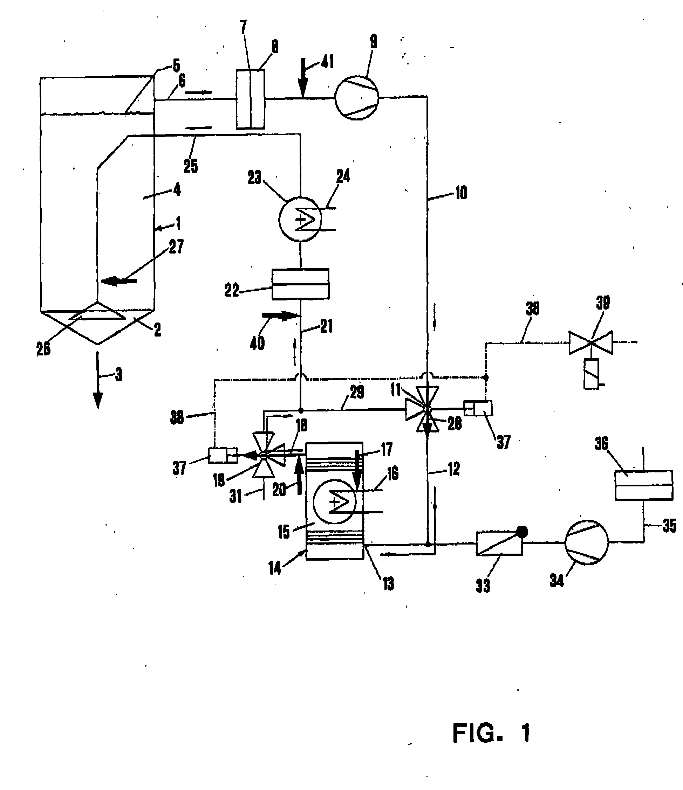

Die Vorrichtung, wie sie in den Figuren 1 bis 5 dargestellt ist, und insbesondere unter Bezugnahme nun auf Figur 1, umfasst einen Trocknungsbehälter 1, der einen runden oder rechteckigen Querschnitt aufweisen kann und mit Schüttgut 4 befüllt ist, wobei der Trocknungsbehälter 1 an seinem unteren Ende einen Auslaufkonus 2 besitzt, der, durch den Pfeil 3 angedeutet, mit einer nicht näher dargestellten Verarbeitungsmaschine verbunden ist. Aus diesem Trocknungsbehälter 1 fließt das Schüttgut 4 entweder kontinuierlich oder taktweise im freien Fall zu einer nicht näher gezeigten Verarbeitungsmaschine, bei der es sich beispielsweise um eine Kunststoffspritzgießmaschine handeln kann, wobei in einem solchen Fall in dem Trocknungsbehälter 1 Kunststoffgranulat eingefüllt ist.

Um das Schüttgut 4 vor dem Zuführen zu einer Verarbeitungsmaschine zu trocknen, ist ein Trocknungskreis vorgesehen. Der Trocknungsbehälter 1 ist grundsätzlich so bemessen, dass er, entsprechend der notwendigen Verweilzeit des Schüttguts 4 im Trockeriluftstrom, ein Mehrfaches der stündlichen Verbrauchsmenge der Verarbeitungsmaschine aufnehmen kann.

Über den Trocknungskreis wird oberhalb des Füllspiegels 5 des Schüttguts 4, wobei sich dieser Füllspiegel 5 auf einen gefüllten Trocknungsbehälter 1 bezieht, Luft- bzw. Trockengas mittels einer Saugleitung 6, einen Rückluftfilter 7 mit einem Staubsammelraum 8 durch ein Trockenluftgebläse 9 angesaugt. Die Strömungsrichtung der Luft bzw. der Gase sind in den schematischen Darstellungen der Figuren jeweils mit Richtungspfeilen angegeben. Das Trockenluftgebläse 9 ist über eine Leitung 10 mit einem ersten Ventil 11 verbunden. Dieses erste Ventil 11 kann in verschiedenen Stellungen arbeiten, wobei das Ventil 11 im Trockenbetrieb zum Trocknen des Schüttguts 4 in dem Trocknungsbehälter 1, die Leitung 10 über die Leitung 12 mit der Eingangsseite 13 einer Trockenmittelkammer 14, die mit Trockenmittel 15 gefüllt ist, verbindet.

In der Trockenmittelkammer 14 ist eine Heizung 16 vorhanden, die direkt in das Trockenmittel 15 eingesetzt ist. Zum Erfassen der Oberflächentemperatur der Heizung 16 ist an den Heizstäben dieser Heizung 16 ein Temperatursensor 17, schematisch in der Figur 1 mit einem Pfeil angedeutet, vorgesehen. Die Ausgangsseite 18 der Trockenmittelkammer 14 ist mit einem zweiten Ventil 19 verbunden.

Die Temperatur in dem Leitungsabschnitt zwischen der Ausgangsseite 18 der Trockenmittelkammer 14 und dem Ventil 19 wird durch einen weiteren Temperatursensor 20 erfasst.

Das Ventil 19 ist über eine Verbindungsleitung 21 mit einem Feinstfilter 22 verbunden und dieser ist mit einer Trocknungs-Heizeinrichtung 23, die eine Stabheizung 24 aufweist, verbunden. Die Ausgangsseite der Trocknungs-Heizeinrichtung 23 ist über eine Zuführleitung 25 mit einem Auslass 26, der im Bereich des Auslasskonus 2 angeordnet ist, verbunden. An der Zuführleitung 25 ist, nahe des Auslasses 26, ein Temperatursensor 27 angeordnet.

Im Trockenbetrieb der Vorrichtung zum Trocknen des Schüttguts 4 wird die Luft bzw. das Trockengas über die Saugleitung 6 angesaugt und der Trockenmittelkammer 14 über die Leitung 10, das Ventil 11 und die Leitung 12 zugeführt. Folglich ist die Druckseite des Trockenluftgeblüses 9 mit der Trockenmittelkammer 14 verbunden. Das Trockengas durchströmt dann die Trockenmittelkammer 14, die mit Molekularsieb oder Silikagel befüllt sein kann.

Die Feuchtigkeit aus dem in dem Trocknungsbehälter 1 eingefüllten Schüttgut 4 wird in der Trockenmittelkammer 14 adsorbiert. Das Trockengas verlässt dann die Trockenmittelkammer 14 über das Ventil 19 und strömt dann direkt in die Trocknungs-Heizeinrichtung 23 oder über den optionalen Feinstfilter 22, der in Figur 1 gezeigt ist. Die getrocknete Luft wird dann in den unteren Teil des Trocknungsbehälters 1 eingeblasen und durchströmt somit das Schüttgut 4 von unten nach oben. Dabei gibt das Gas Wärme an das Schüttgut 4 ab und nimmt gleichzeitig die aus dem Schüttgut entweichende Feuchtigkeit auf. Durch das kalte, von oben nachfließende Schüttgut 4 wird das Gas abgekühlt und oberhalb des Produktspiegels wieder vom Gebläse 9 über den Filter 7 angesaugt.

Die Drehzahl und dadurch die Förderleistung des Trockenluftgebläses 9 wird in Abhängigkeit der über den Temperatursensor 41 erfassten Rücklauftemperatur ausgeregelt oder in Abhängigkeit von der gemessenen Differenz zwischen der Raumtemperatur am Aufstellort des Trocknungsbehälters 1 und der Rücklauftemperatur, gemessen am Temperatursensor 41, geregelt. Als Stellglied eignet sich dabei für kleinere Ausführungen der Anordnung ein regelbarer Gleichstrom-Gebläsemotor (Trocknungsgebläse 9), der über eine Pulsweitenmodulation in weitem Drehzahlbereich regelbar ist. Bei größeren Trockenanlagen könnten auch Wechsel- oder Drehstromgebläse mit regelbaren Frequenzumrichtem eingesetzt werden. Auf diese Weise lassen sich Trocknungsbehälter 1, aus denen vorübergehend kein Produkt mehr entnommen wird, so ausregeln, dass die Temperatur der in den Trocknungsbehälter 1 eintretenden Luft konstant bleibt, während die Luftmenge so weit reduziert wird, dass nur noch die Abstrahlverluste der Anordnung kompensiert werden. Damit ist eine besonders schonende und vor allem energiesparende Trocknung bei konstanter Austrittstemperatur des Trockenguts bzw. Schüttguts aus dem Trocknungsbehälter 1 realisierbar.

Anhand des Trocknungskreises, der durch die entsprechende Stellung der beiden Ventile 11 und 19 eingerichtet wird (für diesen Trockenbetrieb sind die Durchlassrichtungen der beiden Ventile mit Pfeilen 28 angegeben), kann das Schüttgut 4 in dem Trocknungsbehälter 1 kontinuierlich getrocknet werden.

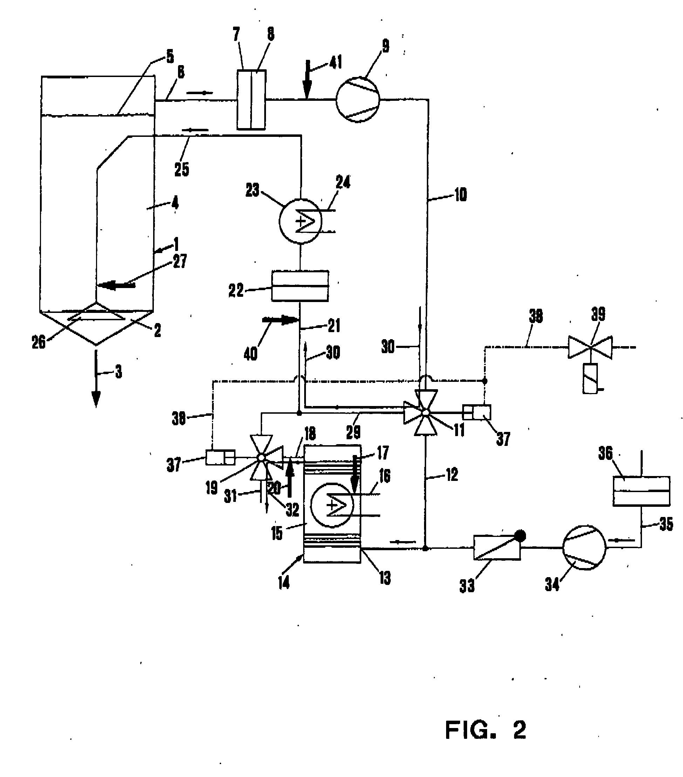

Von Zeit zu Zeit muss das Trockenmittel 15 der Trockenmittelkammer 14 regeneriert werden. Für einen solchen Regenerationsbetrieb werden die beiden Ventile 11 und 19 umgeschaltet, so dass, wie in Figur 2 gezeigt ist, nach einer Umschaltung die von dem Trockenluftgebläse 9 ankommende Leitung 10 über eine Zwischenverbindungsleitung 29 direkt mit der Verbindungsleitung 21 verbunden ist, wie dies durch die angedeutete Pfeilführung 30 in Figur 2 angedeutet ist. Für einen solchen Regenerationsbetrieb wird dann gleichzeitig das Ventil 19 so umgeschaltet, dass die Ausgangsseite 18 mit einer Abluft-Austrittsleitung 31 verbunden ist, wie durch die Pfeilführung 32 dargestellt ist. Der Eingang 13 der Trockenmittelkammer 14 ist dann im Regenerationsbetrieb der Trockenmittelkammer 14 über eine Rückschlagklappe 33 mit der Druckseite eines Regenerations-Luftgebläses 34 verbunden; das Regenerationsluftgebläse 34 saugt Frischluft auf seiner Saugseite über die Leitung 35 und einen Filter 36 an.

Die Rückschlagklappe 33 verhindert, dass während der Trockenstellung der Ventile 11 und 19 Gas über das Regenerationsiuftgebläse 34 in die Atmosphäre entweichen kann.

Für eine Umschaltung der Anordnung zwischen einem Trockenbetrieb, wie er anhand der Figur 1 erläutert ist, und einem Regenerationsbetrieb, wie er anhand des Aufbaus der Figur 2 vorstehend angegeben ist, sind die beiden Ventile 11 und 19 über jeweils einen Druckluftzylinder 37 durch entsprechende Steuerleitungen 38 mit einem Magnetventil 39 gleichzeitig in die jeweils eine bzw. die jeweils andere Stellung betätigbar.

Vorzugsweise werden die beiden Ventile 11 und 19 durch Wegnahme der elektrischen Ansteuerung des stromlos geschlossenen Magnetventils 39 in die Ausgangsstellung durch Federkraft, die in Figur 2 dargestellt ist, zurückgezogen, so dass die zwei getrennten Kreisläufe entstehen, zum einen der Kreislauf, in dem die Leitungen 10 und 21 über die Zwischenverbindungsleitung 29 miteinander verbunden sind, und der andere Kreis, in dem die Trockenmittelkammer 14 auf der Saugseite 13 mit dem Gebläse 34 und damit mit der Frischluftzufuhr und ausgangsseitig mit der Abluft-Austrittsleitung 31 verbunden ist.

Während der Regenerationsphase des Trockenmittels 15 in der Trockenmittelkammer 14 ist somit die Saugleitung 6 über die Verbindungsleitung 29 unmittelbar mit der Zuführleitung 25 verbunden, praktisch in Form eines Bypass um die Trockenmittelkammer 14 herum, die sich im Regenerationsbetrieb befindet. In einem solchen Zustand regelt die Steuerung des Trocknungsbehälters 1 vorübergehend den Luftstrom und die Temperatur im Trocknungsbehälter 1 entsprechend einer vorgewählten Temperatur und entsprechend dem Durchsatz von Schüttgut 4 wie zuvor. Sorgt man vorübergehend noch dafür, dass während der Regenerationsphase der Trockenmittelkammer, 14 kein neues Schüttgut 4 in den Trocknungsbehälter 1 nachfließen kann, dann wird keine neue Feuchtigkeit in den Trocknungsbehälter 1 eingetragen und der Taupunkt der Luft im Behälterkreislauf bleibt weitgehend konstant. Unter Betrieb einer mit dem Trocknungsbehälter 1 verbundenen Anlage, die Schüttgut 4 verbraucht, würde der Füllstand im Trocknungsbehälter 1 während der Regeneration des Trockenmittels 15 etwas absinken, was allerdings für den Trockenprozess ohne wesentliche Bedeutung ist.

Im Regenerationsbetrieb der Trockenmittelkammer 14 wird die über den Filter 36 angesaugte Luft in die Trockenmittelkammer 14 eingeblasen und dort von der Heizung 16 auf Regenerationstemperatur gebracht, Mit dem Temperaturfühler 17, der direkt an dem Heizstab der Heizung 16 anliegt, wird die Oberflächentemperatur des Heizstabs 16 auf ca. 300° bis 350°C ausgeregelt. Dabei wird die Luftmenge über das Regenerationsluftgebläse 34 so gesteuert, dass frei werdende Feuchtigkeit aus dem Trockenmittel 15 als Dampf über die Abluft-Austrittsleitung 31 ausgangsseitig des Ventils 19 an die Atmosphäre abgegeben wird. Das Aufheizen der Trockenmittelkammer 14 bzw. des Trockenmittels 15 erfolgt so lange, bis Ober den Temperatursensor 20 eine Temperatur deutlich über dem Siedepunkt des Wassers (z. B. 105 °C) gemessen wird. Zu diesem Zeitpunkt hat sich dann in der Trockenmittelkammer 14 ein Temperaturprofil eingestellt, bei dem nahe des Heizstabs 16 höhere Temperaturen vorherrschen als an dem Temperatursensor 20. Schaltet man dann bei 105 °C, gemessen am Temperatursensor 20, die Heizung 16 ab und erhöht nun die geförderte Luftmenge über eine entsprechende Ansteuerung des Regenerations-Luftgebläses 34, so wird diese höhere Temperatur in der Trockenmittelkammer 14 als Front in Richtung des Temperatursensors 20 schnell weiter transportiert und die Temperatur an der Messstelle des Temperatursensors 20 steigt vorübergehend über die 105 °C weiter an. Nach Erreichen eines Maximalwerts fällt dann die Ausgangstemperatur schnell ab; nun vergleicht die Steuerung des Trocknungsbehälters 1 die dort eingestellte Vorlauftemperatur für den Trocknungsbehälter 1 mit der abfallenden Temperatur an der Ausgangsseite 18 (Temperatursensor 20). Bei Gleichstand beider Temperaturen kann dann sofort die Zuschaltung der frisch regenerierten Trockenmittelkammer 14 mit dem Trockenmittel 15 zurück in den Trockenprozess erfolgen, indem dann die Druckluft von dem Magnetventil 39 geöffnet wird und die Zylinder der beiden Ventile 11 und 19 durch die Druckluft wieder in die Trockenstellung entsprechend Figur 1 zurückgestellt werden. Eine etwaige Temperaturschwankung in dem Trocknungsbehälter 1, in dem das Schüttgut 4 eingefüllt ist, ist bei dieser Arbeitsweise sehr gering und kann auf einen Bereich von ca, +/-1 °C eingestellt werden.

Der vorstehend anhand der Figur 1 erläuterte Feinstfilter 22 dient dazu, etwa aus dem Trockenmittel 15 der Trockenmittelkammer 14 durch Reibung im Luftstrom gebildete Staubpartikel (Abrieb) zurückzuhalten. Bei Anwendungen der Trocknungsanlage, die in Bezug auf Staub sehr kritisch sind, zum Beispiel bei glasklarem Polycarbonat, das als Schüttgut 4 in den Trocknungsbehälter 1 eingefüllt ist, das für optische Speichermedien, wie CD und DVD, verwendet werden soll, oder bei der Herstellung von optischen Linsen aus Polymethylacrylat oder auch bei Kunststoffteilen für medizintechnische Anwendungen, könnten ansonsten solche Partikel zu Lesefehlern oder sonstigen Qualitätsbeeinträchtigungen führen.

Als weitere Option könnte an einem Messpunkt in der Verbindungsleitung 21, der mit einem Pfeil 40 in Figur 2 angedeutet ist, ein Taupunktsensor eingebaut werden, der das Regenerieren des Trockenmittels 15, das meist zu einem festgelegten Zeitpunkt stattfindet, in Abhängigkeit des Verlaufs des gemessenen Taupunkts auslöst. Auf diese Art und Weise müsste Heizenergie zum Regenerieren des Trockenmittels 15 in der Trockenmittelkammer 14 nicht zu einem festgelegten Zeittakt, sondern nur nach tatsächlichem Bedarf aufgewendet werden, so dass dadurch ein noch sparsamerer Betrieb der Vorrichtung erreicht wird als dann, wenn die Regenerierung des Trockenmittels 15 in regelmäßigem Zeittakt stattfindet.

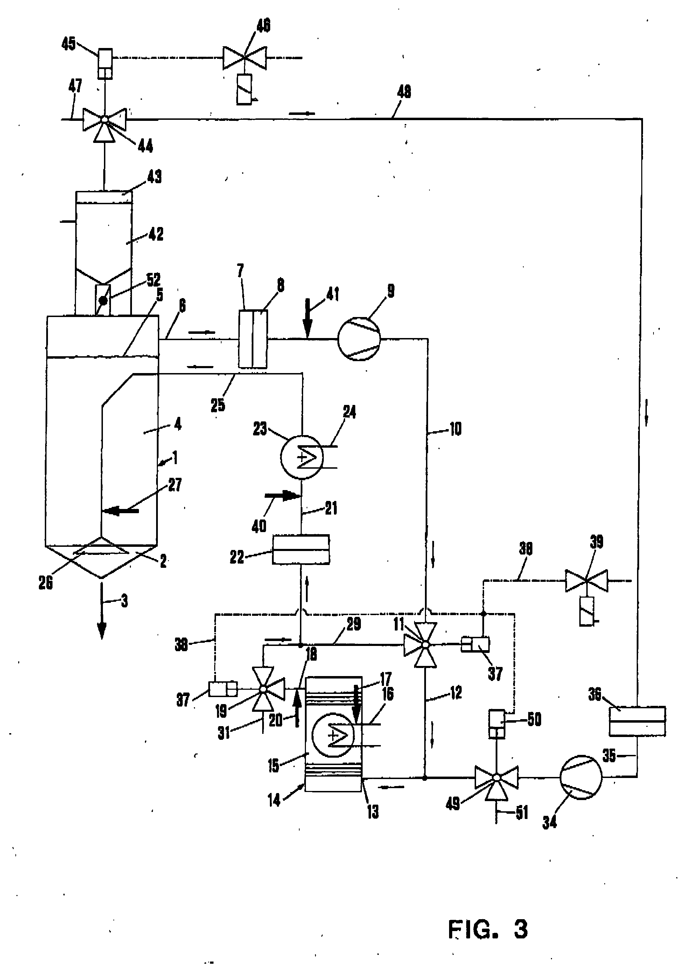

Figur 3 zeigt den Aufbau, wie er auch in den Figuren 1 und 2 dargestellt ist, allerdings mit einem zusätzlichen Förderteil, mit dem das Schüttgut 4 automatisch in den Trocknungsbehälter nachgefördert werden kann.

Der Förderkreis umfasst einen Abscheidebehälter 42 mit einem Deckel 43 mit Filtersieb und einem saugseitigen Ventil 44, das über einen Druckluftzylinder 45 betätigt wird. Der Druckluftzylinder 45 wird über ein Magnetventil 46 in die Förderstellung 46 ausgefahren und durch Federkraft in seine Ruhestellung zurückgezogen. Das Ventil 44 ist so aufgebaut und angeordnet, dass es in seiner Grund- oder Ruhestellung zu der Umgebungsluft über die Leitung 47 geöffnet ist. Darüber hinaus ist das Ventil 44 über eine Rohr- bzw. Schlauchverbindung 48 mit dem Filter 36, der Bestandteil des Regenerationskreises ist, der anhand der Figur 2 erläutert wurde, und somit mit der Saugseite des Regenerationsluftgebläses 34, verbunden. Allerdings ist in der Ausführungsform der Figur 3 die Rückschlagklappe 33, die zwischen der Druckseite des Regenerationsluftgebläses 34 und der Eingangsseite 13 der Trockenmittelkammer 14 eingebunden ist, durch ein Luftventil 49 ersetzt, das gemeinsam mit den Ventilen 11 und 19 über einen entsprechenden Druckluftzylinder 50 angesteuert wird. Auf diese Art und Weise kann das bereits vorhandene Regenerationsluftgebläse 34 zu den Zeiten, in denen keine Regeneration des Trockenmittels 15 in der Trockenmittelkammer 14 erfolgt, dazu genutzt werden, neues Schüttgut 4 über den Abscheidebehälter 42 in den Trocknungsbehälter 1 einzufüllen. In der Darstellung der Figur 3 ist der Trocknungsbehälter 1 gefüllt, das Regenerationsluftgebläse 34 befindet in Ruhestellung und der Trocknungskreis ist mit dem Trocknungsbehälter 1 in der Trockenstellung der Ventile 11, 19 und 49 verbunden.

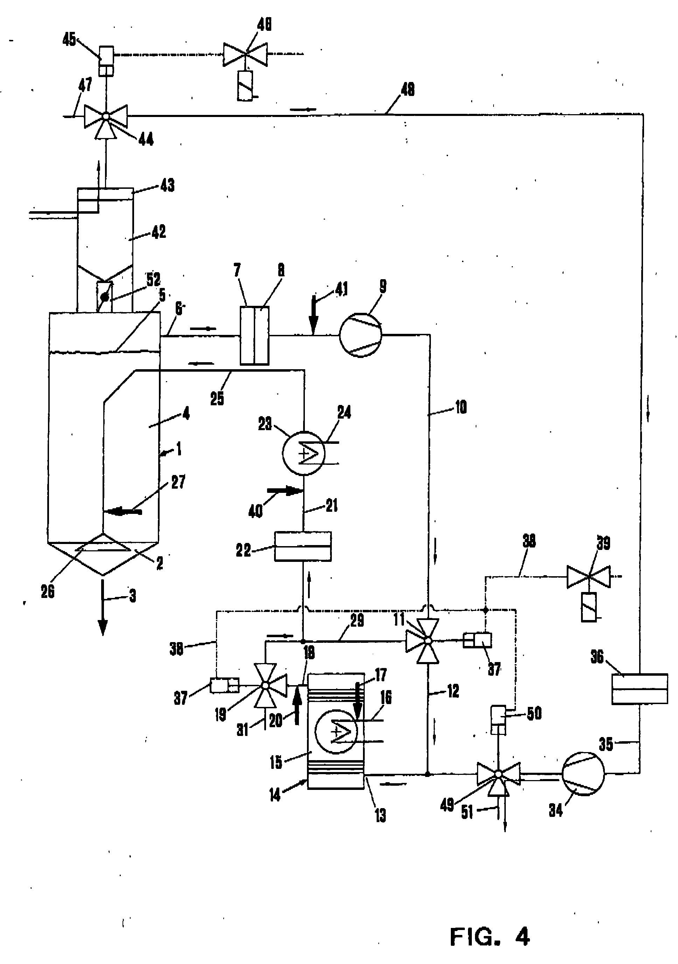

Die Vorrichtung, wie sie in Figur 4 gezeigt ist, entspricht in ihrem Aufbau derjenigen, die vorstehend anhand der Figur 3 beschrieben ist. In Figur 4 ist die Anordnung in der Trocknungsstellung gezeigt. Hierbei ist das Magnetventil 39 geöffnet, so dass die entsprechenden Druckluftzylinder 37 der Ventile 11 und 19 sowie der Druckluftzylinder 50 des Ventils 49 in der ausgefahrenen Position stehen. Hierdurch ist die Trockenmittelkammer 14 über das Ventil 11 mit der Leitung 10 eingangsseitig verbunden und die Trockenmittelkammer 14 ist ausgangsseitig über das Ventil 19 mit der Leitung 21 verbunden. Wenn nun der Füllstand im Trocknungsbehälter 1 absinkt und ein entsprechender, nicht näher dargestellter Füllstandsmelder in dem Trocknungsbehälter 1 das Erfordernis eines Nachfüllens mit Schüttgut 4 signalisiert, wird der Druckluftzylinder 45 des Ventils 44 am Deckel 43 des Abscheiders 42 ausgefahren und verschließt damit die Öffnung bzw. Leitung 47, die zu der Umgebungsluft führt. Gleichzeitig läuft das Regenerationsluftgebläse 34 an und erzeugt über den Filter 36 mit Staubsammler (nicht näher mit Bezugszeichen bezeichnet) einen Sog am Abscheider 42, mit dem dann das Schüttgut 4 aus einem nicht näher gezeigten Vorratsbehälter in den Abscheidebehälter 42 gesaugt wird. Die druckseitige Abluft des Regenerationsluftgebläses 34 wird über das Ventil 49 über die Ablassleitung 51 an die Atmosphäre abgegeben. Das Fördern von Schüttgut 4, um den Trocknungsbehälter 1 nachzufüllen, kann im Zeittakt von einigen Sekunden erfolgen. Danach wird der Druckluftzylinder 45 kurz entlastet und das Schüttgut 4 im Abscheidebehälter 42 kann über die Auslaufklappe 52 in den Trocknungsbehälter 1 fließen.

Die Fördervorgänge, wie sie vorstehend beschrieben sind, werden so lange wiederholt, bis ein Füllstandsmelder im Trocknungsbehälter 1 das Fördern unterbricht und das Regenerationsluftgebläse 34, in diesem Fall als Sauggebläse genutzt, abschaltet.

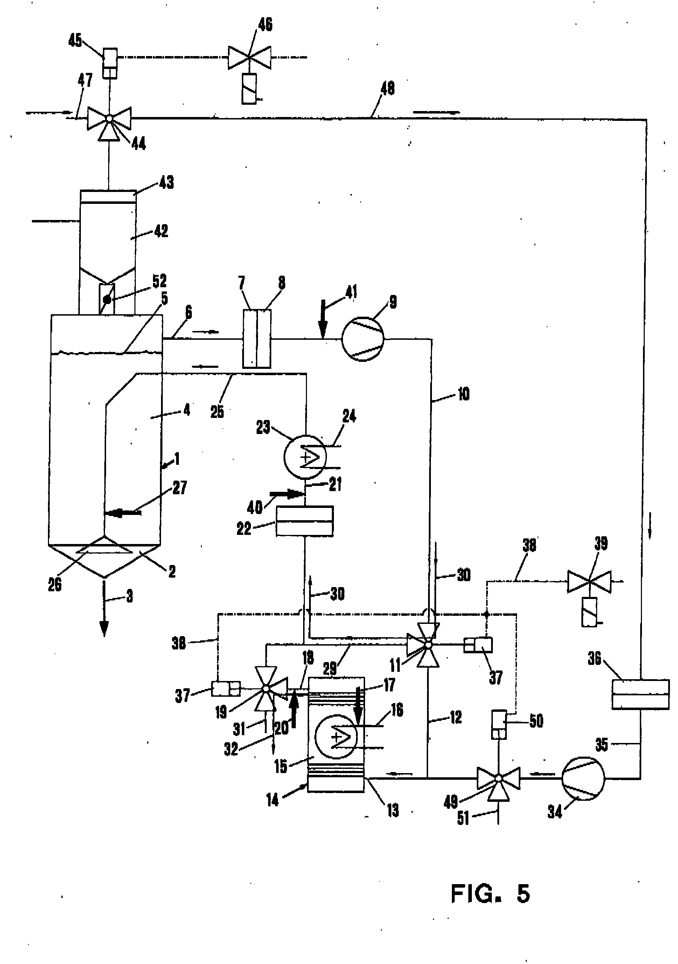

Während vorstehend anhand der Figur 4 die Anordnung mit dem Förderkreis in der Trocknungs- und Förderstellung gezeigt und erläutert wurde, ist in Figur 5 die Anordnung der Figur 4 in der Regenerierstellung gezeigt.

Vergleichbar mit der Darstellung, wie sie in Figur 2 gezeigt ist, wird der Luftkreislauf durch den Trocknungsbehälter 1 über die Zwischenverbindungsleitung 29, unter der entsprechenden Stellung der Ventile 11 und 19, geführt. In einem solchen Betrieb ist es vorteilhaft, einen stabilen Taupunkt im Trocknungsbehälter 1 beizubehalten, wenn kein frisches Schüttgut 4 und damit keine neue Feuchtigkeit in den Trocknungsbehälter 1 gefördert wird. Gleichzeitig wird in dieser Stellung das Trockenmittel 15 in der Trockenmittelkammer 14 durch Betrieb des Regenerationskreislaufs regeneriert. Signale eines Füllstandsmelders in dem Trocknungsbehälter 1 werden in dieser Phase vorübergehend so lange nicht beachtet, wie der Regenerationslauf für das Trockenmittel 15 in Betrieb ist.

Die Regeneration des Trockenmittels 15 in der Trockenmittelkammar 14 findet durch Raumluft statt, die unter diesem Betrieb über die Leitung 47 an dem Ventil 44 oberhalb des Abscheiders 42 angesaugt wird und über den Filter 36 und das Regenerationstuftgebläse 34 und über das Ventil 49 geblasen wird. Dieser Ansaugvorgang der Luft erfolgt bei gegenüber dem Fördervorgang deutlich reduzierter Luftfördermenge des Regenerationsluftgebläses 34, wie dies bereits in Verbindung mit Figur 2 vorstehend beschrieben ist.

Die Nutzung des Regenerationsluftgebläses 34 in einer Doppelfunktion, zum einen während der Regeneration des Trockenmittels 15 in der Trockenmittelkammer 14 und zum anderen als Fördergebläse zur Beschickung des Trocknungsbehälters 1 mit neuem Schüttgut in Zeiten, wo keine Regeneration stattfindet, stellt eine besonders kostengünstige Lösung dar.

Es ist darauf hinzuweisen, dass die Funktionsweisen der einzelnen Bauteile, wie sie in den jeweiligen Figuren dargestellt sind, nicht detailliert zu jeder Figur beschrieben sind. Daher sind die Ausführungen zu den entsprechenden Bauteilen oder Bauteilgruppen, wie sie zu einer Figur angegeben sind, entsprechend auf die anderen Figuren übertragbar.

## Patentansprüche

1. Vorrichtung zum Trocknen von Schüttgut
mit einem Trocknungsbehälter (1) zur Aufnahme von Schüttgut,
mit einem Trocknungskreis, der ein Trockenluftgebläse (9),
das mit dem Trocknungsbehälter (1) an dessen oberem Ende über eine Saugleitung verbunden ist, und eine Trocknungs-Heizeinrichtung (23), die Ober eine Druckleitung (25) mit dem unteren Ende des Trocknungsbehälters (1) verbunden ist, umfasst,
mit einer Trocknungseinrichtung, die eine Trockenmittelkammer (14) mit Trocknungsmittel (15) umfasst, die in den Luftkreislauf zwischen Trockenluftgebläse (9) und Trocknungs-Heizeinrichtung (23) eingebunden ist,
mit einem Regenerationskreis für das Trocknungsmittel (15), der eine Regenerations-Heizeinrichtung (16), die der Trockenmittelkammer (14) zugeordnet ist, und ein Regenerationsluftgebläse (34) umfasst,
und mit mindestens zwei Absperreinrichtungen (11, 19) in dem Leitungssystem, um den Regenerationskreis zyklisch zu aktivieren,
**dadurch gekennzeichnet,**
**dass** die Absperreinrichtungen mindestens zwei Ventile (11, 19) sind, die in einer Stellung die Druckseite des Trockenluftgebläses (9) direkt mit der Eingangsseite (13) der Trocknungs-Heizeinrichtung (23) über eine Bypassleitung (29) verbinden, und
**dass** das Regenerationsluftgebläse (34) sowie die Trockenmittelkammer (14) einen unabhängigen Regenerationskreis mit Frischluftzufuhr bilden.

2. Vorrichtung nach Anspruch 1, **dadurch gekennzeichnet,**
**dass** das eine Ventil (11) in der Druckleitung (10) zwischen der Druckseite des Trockenluftgebläses (9) und der Luftzuführungsseite (13) der Trockenmittelkammer (14) angeordnet ist,
**dass** das andere Ventil (19) zwischen der Ausgangsseite (18) der Trockenmittelkammer (14) und der Eingangsseite der Trocknurtgs-Heizeinrichtung (23) angeordnet ist, und
**dass** die beiden Ventile (11, 19) in einer ihrer beiden Stellungen zum einen die Luftzuführung zu der Trockenmittelkammer (14) und zum anderen die Verbindung zwischen der Trockenmittelkammer (14) und der Eingangsseite der TrocknungsHeizeinrichtung (23) unterbrechen und gleichzeitig eine Verbindung zwischen der Druckseite des Trockenluftgebläses (9) und der Eingangsseite der TrocknungsHeizeinrichtung (23) herstellen, und
**dass** die beiden Ventile (11, 19) in ihrer anderen Stellung zum einen die Luftzuführung von dem Trockenluftgebläse (9) zu dem Eingang (13) der Trockenmittelkammer (14) freigeben und zum anderen die Verbindung zwischen Trockenmittelkammer (14) und der Eingangsseite der Trocknungs-Heizeinrichtung (23) freigeben und gleichzeitig eine direkte Verbindung zwischen der Druckseite des Trockenluftgebläses (9) und der Eingangsseite (13) der Trocknungs-Heizeinrichtung (23) unterbrechen, wobei in dieser Stellung der Ventile (11, 19) die Frischluftzufuhr durch das Regeneriergebläse (34) unterbrochen ist.

3. Vorrichtung nach Anspruch 2, **dadurch gekennzeichnet, dass** die Frischluftzufuhr durch eine Rückschlagklappe (33) unterbrochen wird.

4. Vorrichtung nach Anspruch 2, **dadurch gekennzeichnet, dass** die Frischluftzufuhr durch ein Ventil (49) unterbrochen wird.

5. Vorrichtung nach Anspruch 4, **dadurch gekennzeichnet, dass** das Ventil (49) auf der Druckseite des Regenerationsluftgeblases (34) angeordnet ist.

6. Vorrichtung nach einem der Ansprüche 1 bis 5, **dadurch gekennzeichnet, dass** ausgangsseitig der Trocknungs-Heizeinrichtung (23) ein Temperatursensor (27) angeordnet ist, der einen Istwert erfasst, um die Temperatur der Trocknungs-Heizeinrichtung (23) auf einen Sollwert zu regeln.

7. Vorrichtung nach einem der Ansprüche 1 bis 6, **dadurch gekennzeichnet, dass** ein Temperatursensor (41) eingangsseitig (Saugseite) des Trockenluftgebläses (9) angeordnet ist, der die Temperatur von zugeführter Luft erfasst.

8. Vorrichtung nach einem der Ansprüche 1 bis 7, **dadurch gekennzeichnet, dass** ein Temperatursensor (20) ausgangsseitig der Trockenmittelkammer (14) angeordnet ist, der die Temperatur der Regenerationsabluft erfasst.

9. Vorrichtung nach einem der Ansprüche 1 bis 8, **dadurch gekennzeichnet, dass** eine Heizung (16) für die Trockenmittelkammer (14) direkt in der Trockenmittelkammer (14), die mit dem Trocknungsmittel (15) gefüllt ist, angeordnet ist.

10. Vorrichtung nach Anspruch 9, **dadurch gekennzeichnet, dass** ein Temperatursensor (17) an der Heizung (16) der Trockenmittelkammer (14) angeordnet ist.

11. Vorrichtung nach Anspruch 2, **dadurch gekennzeichnet, dass** die beiden Ventile (11, 19) gleichzeitig angesteuert werden.

12. Vorrichtung nach Anspruch 4, **dadurch gekennzeichnet, dass** die drei Ventile (11, 19, 49) gleichzeitig angesteuert werden.

13. Vorrichtung nach Anspruch 11 oder 12, **dadurch gekennzeichnet, dass** die beiden Ventile (11, 19) am Ein- (13) und Ausgang (18) der Trockenmittelkammer (14) und gegebenenfalls weitere Ventile (49) über ein gemeinsames Magnetventil (39) mit Druckluft angesteuert werden.

14. Vorrichtung nach einem der Ansprüche 1 bis 13, **dadurch gekennzeichnet, dass** ein Schüttgut-Einlass (42) sowie eine Luftansaugung (48) an der Oberseite des Trocknungsbehälters (1) vorgesehen ist.

15. Verfahren zum Trocknen von Schüttgut unter Verwendung der Vorrichtung nach einem der Ansprüche 1 bis 14, **dadurch gekennzeichnet,**
**dass** in einer Betriebsphase zum Trocknen des Schüttguts der Trocknungskreis durch entsprechende Einstellungen der mindestens zwei Ventile so eingerichtet ist, dass die von dem Trocknungsbehälter über das Trocknungsluftgebläse angesaugte Luft der Trockenmittelkammer zugeführt wird, die aus der Trockenmittelkammer austretende Luft der Trocknungs-Heizeinrichtung zugeführt wird und die über die Trocknungs-Heizeinrichtung erwärmte Luft dem Trocknungsbehälter zugeführt wird,
während in einer Betriebsphase zum Regenerieren des Trockenmittels die mindestens zwei Ventile so eingestellt sind, dass die von dem Trocknungsbehälter über das Trockenluftgebläse angesaugte Luft unmittelbar der Trocknungs-Heizeinrichtung und von dort dem Trocknungsbehälter zugeführt wird und
gleichzeitig der Eingangsseite der Trockenmittelkammer Frischluft über das Regenerationsluftgebläse zugeführt wird, hierbei das Trocknungsmittel aufgeheizt wird und die aus der Trockenmittelkammer austretende Luft abgeführt wird, so dass Regenerationsluftgebläse und Trockenmittelkammer und einen unabhängigen Regenerationskreis bilden,

16. Verfahren nach Anspruch 15, **dadurch gekennzeichnet, dass** die Eingangstemperatur der Luft in den Trocknungsbehälter mittels der Trocknungs-Heizeinrichtung konstant gehalten wird und durch zeitweise Unterbrechung der Befüllung des Trocknungsbehälters mit Trockengut die Wassermenge im Trocknungsbehälter während der Zeit nicht ansteigt, in der die Trockenmittelkammer von einem Regenerationsgebläse aufgeheizt und wieder abgekühlt wird.

17. Verfahren nach Anspruch 15 oder 16, **dadurch gekennzeichnet, dass** der Luftstrom, der sowohl im Trockenbetrieb als auch während der Regeneration des Trocknungsmittels durch den Trocknungsbehälter strömt, in Abhängigkeit von der Rücklauftemperatur des Gases, gemessen auf der Saugseite des Trockenluftgebläses, stufenlos entsprechend dem Wärmebedarf des Trockengutes und der prozessbedingten Wärmeverluste geregelt wird.

18. Verfahren nach einem der Ansprüche 15 bis 17, **dadurch gekennzeichnet, dass** in der Trocknungsphase bei der Trocknung von temperaturempfindlichem Trockengut zur Regelung der Trockenluftmenge bei Gleichstrommotoren eine Impulsweiten-Modulation eingesetzt wird, um unerwünschte Friktionswärme der Gebläse zu vermeiden und deren mechanischen Wirkungsgrad zu erhöhen.

19. Verfahren nach einem der Ansprüche 15 bis 18, **dadurch gekennzeichnet, dass** in der Trocknungsphase bei der Trocknung von temperaturempfindlichem Trockengut zur Regelung der Trockenluftmenge bei Dreh- oder Wechselstrommotoren eine Frequenzumrichtung eingesetzt wird, um unerwünschte Friktionswärme der Gebläse zu vermeiden und deren mechanischen Wirkungsgrad zu erhöhen.

20. Verfahren nach einem der Ansprüche 15 bis 19, **dadurch gekennzeichnet, dass** die Luftmenge, die durch den Trocknungsbehälter geführt wird, entsprechend der Differenz zwischen der Umgebungstemperatur des Trocknungsbehälters und der Rücklauftemperatur des Gases, gemessen auf der Saugseite des Trockenluftgebläses, stufenlos geregelt wird.

21. Verfahren nach einem der Ansprüche 15 bis 20, **dadurch gekennzeichnet, dass** die Regenerationsablufttemperatur der Trockenmittelkammer während der Kühlphase nach erfolgtem Aufheizen auf Regenerationstemperatur stetig mit der Eingangstemperatur des Gases in den Trocknungsbehälter verglichen wird und bei gleichem Wert der beiden Temperaturen die Umschaltung der frisch regenerierten Trockenmittelkammer in den Trockenluftkreislauf erfolgt.

22. Verfahren nach einem der Ansprüche 15 bis 21, **dadurch gekennzeichnet, dass** die Oberflächentemperatur der Heizung der Trockenmittelkammer gemessen wird und auf max. 360 °C begrenzt wird.

23. Verfahren nach einem der Ansprüche 15 bis 22, **dadurch gekennzeichnet, dass** bei Ausfall von Druckluft oder Strom im Bereich der Trockenmittelkammer ein Luftstrom durch den Trocknungsbehälter unter Abtrennung der Trockenmittelkammer mit konstanter Temperatur aufrechterhalten wird.

24. Verfahren nach einem der Ansprüche 15 bis 23, **dadurch gekennzeichnet, dass** das Regenerationsluftgebläse in der Trocknungsphase als Fördergebläse genutzt wird, um Schüttgut in den Trocknungsbehälter zu befördern.

25. Verfahren nach Anspruch 24, **dadurch gekennzeichnet, dass** das Regenerationsluftgebläse in der Trocknungsphase auf seiner Druckseite von der Trockenmittelkammer getrennt wird, um auf seiner Saugseite als Fördergebläse genutzt zu werden.

26. Verfahren nach einem der Ansprüche 15 bis 25, **dadurch gekennzeichnet, dass** nur in der Trocknungsphase der Trocknungsbehälter mit Schüttgut aufgefüllt wird.

27. Verfahren nach Anspruch 26, **dadurch gekennzeichnet, dass** für die Auffüllung des Trocknungsbehälters mit Schüttgut das Regenerationsluftgebläse (20) genutzt wird.

28. Verfahren nach einem der Ansprüche 15 bis 27, **dadurch gekennzeichnet, dass** die Trockenmittelkammer mehrere Trocknungsbehälter entfeuchtet, wobei jeder Trockenmittelkammer ein eigenes Trockenluftgebläse und eine eigene Temperaturregelung zugeordnet ist, und dass während der Regeneration der Trockenmittelkammer die Temperatur und die Luftmenge jedes Trocknungsbehälters auf dessen jeweiligen Wärmebedarf und den Temperatur-Sollwert ausgeregelt wird.
